(19) Europäisches Patentamt
European Patent Office
Office européen des brevets

(11) EP 0 810 077 B1

## (12) EUROPEAN PATENT SPECIFICATION

(45) Date of publication and mention
of the grant of the patent:
**24.01.2001 Bulletin 2001/04**

(51) Int Cl.[7]: **B29C 55/00**, C08J 5/18
// B29K23:00

(21) Application number: **97107933.0**

(22) Date of filing: **15.05.1997**

(54) **Synthetic paper with excellent printability**

Synthetisches Papier mit ausgezeichneter Druckfähigkeit

Papier synthétique ayant une imprimabilité excellente

(84) Designated Contracting States:
**BE DE FR GB NL**

(30) Priority: **27.05.1996 JP 13196796**

(43) Date of publication of application:
**03.12.1997 Bulletin 1997/49**

(73) Proprietors:
- **OJI-YUKA SYNTHETIC PAPER CO., LTD.
  Tokyo (JP)**
- **SANYO CHEMICAL INDUSTRIES, LTD.
  Kyoto-shi Kyoto (JP)**

(72) Inventors:
- **Yamanaka, Masaaki,
  c/o Oji-Yuka Synth. Paper Ltd.
  Kashima-gun, Ibaraki (JP)**
- **Koyama, Hiroshi, c/o Oji-Yuka Synth. Paper Ltd.
  Kashima-gun, Ibaraki (JP)**

- **Ueda, Yasuhiro, c/o Sanyo Chemical Ind. Ltd.
  Kyoto-shi, Kyoto (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 613 919          GB-A- 2 112 789
US-A- 4 986 866**

- **DATABASE WPI Section Ch, Week 9223 Derwent
  Publications Ltd., London, GB; Class A17, AN
  92-188650 XP002056161 & JP 04 122 736 A
  (TORAY IND INC) , 23 April 1992 & CHEMICAL
  ABSTRACTS, vol. 117, no. 24, 14 December 1992
  Columbus, Ohio, US; abstract no. 235435,**

**Description**

The present invention relates to synthetic paper made of stretched polypropylene resin film with excellent antistatic properties and offset printability.

BACKGROUND OF THE INVENTION

Polypropylene resin films have hitherto been used in applications such as various wrapping films (see JP-A-54-99180; the term "JP-A" as used herein means an "unexamined published Japanese patent application") and synthetic papers (see US-A-4318950,,JP-B-63-25613, and JP-A-5-57110; the term "JP-B" as used herein means an "examined Japanese patent publication") because they are inexpensive and excellent in water and chemical resistance.

For use as synthetic papers, polypropylene resin films are required not only to possess improved antistatic properties so as to have satisfactory suitability for paper feeding and discharge (suitability for film feeding), but also to be printable by gravure printing, offset printing, flexography, etc.

Known techniques for imparting antistatic properties to polypropylene resin films include: a method comprising mixing a film base resin with a low-molecular weight antistatic agent of the kneading type, e.g., sorbitan monooleate or glycerol monostearate, and then kneading the mixture and extruding into a film; and a method comprising coating the surface of a film with a low-molecular weight antistatic agent of the coating type, e.g., a poly(oxyethylene) derivative, and then drying the coating. These methods have been put to practical use.

However, the former method has a drawback that the antistatic properties do not last for long and there is a desire in the market for an improvement in this respect. The latter method has drawbacks in that the film loses its antistatic effect upon contact with water during use because the antistatic agent coated on the film surface is removed by the water and the period over which the film retains its antistatic properties is shorter than in the film produced using an antistatic agent of the kneading type. In addition, both methods have a further drawback in that the films produced cannot be used in offset printing or flexography, although printable by gravure printing.

It has therefore been proposed to use a high-molecular weight permanent antistatic agent of the kneading type in order to prolong the period over which the antistatic properties last.

For example, in EP-A-613919 a resin composition is proposed which comprises from 55 to 90% by weight polypropylene resin (component A), from 5 to 40% by weight polyetheresteramide containing aromatic rings (component B) which is derived from a polyamide having a number-average molecular weight of from 200 to 5,000 and containing a carboxyl group at each end (component b1) and an alkylene oxide adduct of bisphenol having a number-average molecular weight of from 300 to 5,000 (component b2), from 3 to 20% by weight polyamide resin (component C), and from 1 to 20% by weight at least one modified low-molecular weight polypropylene (component D) selected from the following component d1 to component d3.

Component d1: a modified low-molecular weight polypropylene having a number-average molecular weight of from 800 to 25,000 and an acid value of from 5 to 150.

Component d2: a modified low-molecular weight polypropylene having a number-average molecular weight of from 800 to 25,000 and a hydroxyl value of from 5 to 150.

Component d3: a modified low-molecular weight polypropylene obtained by partly or wholly esterifying component d1 with a polyoxyalkylene compound and having a number-average molecular weight of from 1,000 to 28,000.

The above resin composition has the advantages that its antistatic properties last over a satisfactorily prolonged period, and that gravure ink adhesion thereto is excellent because it contains polymers having polar groups (components B, C, and D). However, it has the drawback that it cannot be printed by offset printing or flexography.

On the other hand, with respect to an antistatic agent of the coating type, it has been proposed to use a blend of a high-molecular weight acrylic resin antistatic agent with a primer such as a polyethyleneimine or a polyamine-polyamide epichlorohydrin adduct (see US-A-4663216) to not only attain satisfactory adhesion to a polypropylene resin film to thereby prolong the period over which antistatic properties are retained but also enable multicolor offset printing.

However, the film produced by the above prior art technique is still insufficient in the long-term retention of antistatic properties and is therefore unsatisfactory for practical use.

SUMMARY OF THE INVENTION

As a result of intensive studies made by the present inventors in view of the problems described above, it has been found that stretching a resin film comprising, as a base material, resin components A, B, C, D and E as described below and oxidizing the stretched film by corona discharge treatment, plasma treatment, or the like, are effective in rapidly imparting antistatic properties to the film and also in improving printing ink adhesion thereon because the stretching and oxidation generate ultrafine cracks on the surface of the oriented polypropylene crystals in the film matrix and a permanent antistatic agent incorporated into the film through kneading appears easily on the surface of the film. The present invention is based on this finding.

The synthetic paper, having excellent printability, of the present invention comprises a film obtained by oxidizing the surface of a film obtained by stretching a resin film comprising as the base material a resin composition comprising

100 parts by weight of resin components comprising

| component A | a polypropylene resin | 55-90 wt% |
|---|---|---|
| component B | a polyetheresteramide containing aromatic rings which is derived from | |
| component b1 | a polyamide having a number-average molecular weight of from 200 to 5,000 and containing a carboxyl group at each end | |
| component b2 | an alkylene oxide adduct of bisphenol having a number-average molecular weight of from 300 to 5,000 | 5-40 wt% |
| component C | a polyamide resin | 3-20 wt% |
| and component D | at least one modified low-molecular weight polypropylene selected from the following components d1 to d3 | 1-20 wt% |
| component d1 | an acid modified low-molecular weight polypropylene having a number-average molecular weight of from 800 to 25,000 and an acid value of from 5 to 150, | |
| component d2 | a hydroxy modified low-molecular weight polypropylene having a number-average molecular weight of from 800 to 25,000 and a hydroxyl value of from 5 to 150, | |
| component d3 | an ester modified low-molecular weight polypropylene obtained by partly or wholly esterifying component d1 with a polyoxyalkylene compound and having a number-average molecular weight of from 1,000 to 28,000, | |

the total amount of all resin components being 100 wt%, and from 10 to 250 parts by weight of component E: fine inorganic particles, said stretching being conducted at a temperature lower than the melting point of the polypropylene resin as component A.

The stretching of a film of a polypropylene resin comprising, as a base material, resin components A, B, C, D and E as described above orientates polypropylene crystals in the polypropylene film matrix. Upon oxidation of the surface of the oriented film by corona discharge treatment, plasma treatment, or the like, the film develops ultrafine cracks on the surface thereof. This facilitates the appearance of the permanent antistatic agent as component B on the film surface to not only rapidly impart antistatic properties to the film, but also improve printing ink adhesion thereon.

## DETAILED DESCRIPTION OF THE INVENTION

[I] Base Material Resin

(1) Components

The resin components for use as the base material of the synthetic paper, having excellent printability, of the present invention comprises the following components A to D.

(a) Polypropylene Resin (Component A)

Examples of the polypropylene resin for use as component A include propylene homopolymer and copolymers (random or block) of propylene and one or more other $\alpha$-olefins having 2 or 4 to 12 carbon atoms. Examples of such other $\alpha$-olefins include ethylene, 1-butene, 1-pentene, 4-methyl-1-pentene, 1-octene, 1-decene, and 1-dodecene.

The polypropylene resin as component A has crystallinity. The polypropylene resin preferably has a degree of crystallinity of usually from 20 to 75%, in particular 35% or higher. Amorphous polypropylene resins having no crystallinity are undesirable in that a surface oxidation treatment brings about neither a sufficient improvement in printability nor rapid impartation of sufficient antistatic properties. The degree of crystallinity can be determined by X-ray diffractometry, infrared spectroscopy and the like.

The polypropylene resin used as component A has a melt flow rate (MFR) of usually from 0.5 to 150 g/10 min, preferably from 1 to 100 g/10 min. The melt flow rate (MFR) thereof can be measured in accordance with ASTM D1238 (temperature 230°C, load 2.16 kg·f).

The content of component A in all base material resin components in the present invention is usually from 55 to 90% by weight, preferably from 60 to 85% by weight. If the content of component A is lower than the lower limit specified above, the resin film obtained has insufficient mechanical strength and poor water resistance. If the content thereof exceeds the upper limit, antistatic properties and offset printability are reduced.

(b) Polyetheresteramide Containing Aromatic Rings (Component B)

Polyetheresteramide containing aromatic rings (permanent antistatic agent) is obtained by reacting polyamide having a carboxyl group at each end (i) and alkylene oxide adduct of bisphenol (ii).

(i) Polyamide Having a Carboxyl Group at Each End (Component b1)

The polyamide having a carboxyl group at each end is any of (1) a polymer yielded by the ring-opening polymerization of a lactam, (2) an aminocarboxylic acid polycondensate, and (3) a dicarboxylic acid/diamine polycondensate which are obtained by subjecting one or more amide-forming monomers to ring-opening polymerization or polycondensation in a conventional manner in the presence of a dicarboxylic acid component having from 4 to 20 carbon atoms as a modifier of molecular weight.

Examples of the lactam which forms the polymer (1) through ring-opening polymerization of lactam include caprolactam, enantholactam, laurolactam, and undecanolactam.

Examples of the aminocarboxylic acid which forms the aminocarboxylic acid polycondensate (2) given above include ω-aminocaproic acid, ω-aminoenanthic acid, ω-aminocaprylic acid, ω-aminopelargonic acid, ω-aminocapric acid, 11-aminoundecanoic acid, and 12-aminododecanoic acid.

Examples of the dicarboxylic acid which reacts with a diamine to form the polycondensate (3) given above include adipic acid, azelaic acid, sebacic acid, undecanedioic acid, dodecanedioic acid, and isophthalic acid. Examples of the diamine include hexamethylenediamine, heptamethylenediamine, octamethylenediamine, and decamethylenediamine.

A combination of two or more of the amide-forming monomers enumerated above may be used. Preferred of those are caprolactam, laurolactam, 12-aminododecanoic acid, and a combination of adipic acid and hexamethylenediamine. Especially preferred are caprolactam and 12-aminododecanoic acid.

Examples of the dicarboxylic acid having 4 to 20 carbon atoms include aliphatic dicarboxylic acids such as succinic acid, glutaric acid, adipic acid, pimelic acid, suberic acid, azelaic acid, sebacic acid, undecanedioic acid, and dodecanedioic acid; aromatic dicarboxylic acids such as terephthalic acid, isophthalic acid, phthalic acid, and naphthalenedicarboxylic acid; alicyclic dicarboxylic acids such as 1,4-cyclohexanedicarboxylic acid and dicyclohexyl-4,4-dicarboxylic acid; and alkali metal salts of 3-sulfoisophthalic acid, such as sodium 3-sulfoisophthalate and potassium 3-sulfoisophthalate. Preferred of these are the alicyclic dicarboxylic acids, the aromatic dicarboxylic acids, and the alkali metal salts of 3-sulfoisophthalic acid. Especially preferred are adipic acid, sebacic acid, terephthalic acid, isophthalic acid, and sodium 3-sulfoisophthalate.

The number-average molecular weight of the polyamide having a carboxyl group at each end (component b1) described above is from 200 to 5,000, preferably from 500 to 3,000. If the number-average molecular weight of the polyamide (component b1) is lower than the lower limit specified above, the resulting polyetheresteramide itself has reduced heat resistance. If the number-average molecular weight thereof exceeds the upper limit, much time is required for polyetheresteramide production because such polyamide has reduced reactivity.

(ii) Alkylene Oxide Adduct of Bisphenol (Component b2)

Alkylene oxide adduct of bisphenol is obtained by reacting bisphenol and alkylene oxide.

Examples of the bisphenols include bisphenol A (4,4'-dihydroxydiphenyl-2,2-propane), bisphenol F (4,4'-dihydroxydiphenylmethane), bisphenol S (4,4'-dihydroxydiphenyl sulfone), and 4,4'-dihydroxydiphenyl-2,2-butane. Especially preferred of these is bisphenol A.

Examples of the alkylene oxide include ethylene oxide, propylene oxide, 1,2- or 1,4-butylene oxide, and mixtures of two or more thereof. Preferred of these is ethylene oxide.

The number-average molecular weight of the alkylene oxide adduct of bisphenol as component b2 described above is usually from 300 to 5,000, preferably from 1,000 to 3,000.

If the number-average molecular weight of component b2 is lower than the lower limit specified above, antistatic properties are insufficient. If the number-average molecular weight thereof exceeds the upper limit, much time is required for polyetheresteramide production because such component b2 has reduced reactivity.

The content of the alkylene oxide adduct of bisphenol as component b2 in the aromatic-ring-containing polyetheresteramide (component B) is usually from 20 to 80% by weight, preferably from 25 to 75% by weight, based on the total amount of components b1 and b2.

Contents of component b2 lower than the lower limit specified above are undesirable in that component B has poor antistatic properties. Contents thereof exceeding the upper limit are undesirable in that component B itself has reduced heat resistance.

Processes for producing the aromatic-ring-containing polyetheresteramide (component B) are not particularly limited. Examples thereof include the following processes (1) and (2).

Process (1): An amide-forming monomer is reacted with a dicarboxylic acid having 4 to 20 carbon atoms to form a polyamide having a carboxyl group at each end as component b1. An alkylene oxide adduct of bisphenol as component b2 is added to the polyamide, and these components are polymerized at a high temperature and a reduced pressure to produce component B.

Process (2): An amide-forming monomer is introduced into a reaction vessel simultaneously with a dicarboxylic acid having 4 to 20 carbon atoms and an alkylene oxide adduct of bisphenol as component b2. The reactants are reacted in the presence or absence of water at a high temperature with pressurizing to thereby yield a polyamide having a carboxyl group at each end, component b1, as an intermediate. Thereafter, the polyamide having a carboxyl group at each end as component b1 is polymerized with the alkylene oxide adduct of bisphenol as component b2 under a reduced pressure to produce the component B.

In the above polymerization reactions, known esterification catalysts are generally used. Examples of the catalysts include antimony catalysts such as antimony trioxide, tin catalysts such as monobutyltin oxide, titanium catalysts such as tetrabutyl titanate, and metal acetate catalysts such as zinc acetate. The amount of these esterification catalysts employed is usually from 0.1 to 5% by weight based on the total amount of components b1 and b2.

The aromatic-ring-containing polyetheresteramide (component B) is not particularly limited in its reduced viscosity ($\eta_{SP}$/C) (ASTM-D2857-93) (0.5 wt% m-cresol solution, 25°C). However, the reduced viscosity thereof is usually from 0.5 to 4.0, preferably from 0.6 to 3.0. If the reduced viscosity thereof is lower than the lower limit specified above, heat resistance is poor. If the reduced viscosity thereof exceeds the upper limit, moldability tends to be reduced.

The content of the polyetheresteramide having aromatic rings (component B) in all base material resin components in the present invention is usually from 5 to 40% by weight, preferably from 5 to 30% by weight. If the content of component B is lower than the lower limit specified above, antistatic properties of resin film are insufficient. If the content thereof exceeds the upper limit, mechanical strength of resin film is reduced.

(c) Polyamide Resin (Component C)

Examples of the polyamide resin for use as component C include (1) polymers obtained by the ring-opening polymerization of lactams, (2) polycondensates of aminocarboxylic acid, and (3) polycondensates of dicarboxylic acid and diamine.

Specific examples thereof include nylon 66, nylon 69, nylon 610, nylon 612, nylon 6, nylon 11, nylon 12, and nylon 46. Also usable are copolyamides such as nylon 6/66, nylon 6/10, nylon 6/12, and nylon 6/66/12. Examples of component C further include aromatic-containing polyamides obtained from an aromatic dicarboxylic acid, e.g., terephthalic acid or isophthalic acid, and either m-xylenediamine or an aliphatic diamine.

Especially preferred of these are nylon 66, nylon 6, and nylon 12.

The polyamide resin used as component C desirably has a reduced viscosity (97% sulfuric acid, concentration 1 g/100 ml, 30°C) of usually from 0.8 to 5, preferably from 1 to 4. If the reduced viscosity thereof is lower than the lower limit specified above, heat resistance tends to be impaired. If the reduced viscosity thereof exceeds the upper limit, moldability tends to be reduced.

The content of the polyamide resin as component C in all base material resin components in the present invention is usually from 3 to 20% by weight, preferably from 3 to 15% by weight. If the content of component C is lower than the lower limit specified above, antistatic properties are insufficient. If the content thereof exceeds the upper limit, moldability into film is reduced.

(d) Modified Low-molecular Weight Polypropylene (Component D)

The modified low-molecular weight polypropylene for use as component D is a component capable of functioning to compatibilize the polypropylene resin as component A with the aromatic-ring-containing polyetheresteramide as component B (permanent antistatic agent) and the polyamide resin as component C. This modified low-molecular weight polypropylene (component D) is at least one member selected from the following components d1 to d3.

Component d1: an acid modified low-molecular weight polypropylene having a number-average molecular weight, usually from 800 to 25,000, preferably from 1,000 to 20,000, and an acid value of usually from 5 to 150, preferably from 10 to 100.

Component d2: a hydroxy modified low-molecular weight polypropylene having a number-average molecular weight of from 800 to 25,000 and a hydroxyl value of from 5 to 150, preferably from 10 to 100.

Component d3: an ester modified low-molecular weight polypropylene obtained by partly or wholly esterifying component d1 with a polyoxyalkylene compound and having a number-average molecular weight usually from 1,000 to 28,000, preferably from 1,200 to 25,000.

Component d1

The modified low-molecular weight polypropylene as component d1 can be obtained by modifying a low-molecular weight polypropylene having a number-average molecular weight of from 700 to 20,000 produced by polymerization or by the thermal degradation of a high-molecular weight polypropylene. Specifically, this modification is accomplished by reacting the unmodified low-molecular weight polypropylene with an $\alpha,\beta$-unsaturated carboxylic acid and/or its anhydride by the solution or melt method if desired in the presence of an organic peroxide. From the standpoint of easiness of modification, the low-molecular weight polypropylene obtained by thermal degradation can be produced, for example, by the method described in JP-A-3-62804.

Examples of the $\alpha,\beta$-unsaturated carboxylic acid and/or its anhydride for use in the modification include acrylic acid, methacrylic acid, maleic acid, maleic anhydride, fumaric acid, itaconic acid, itaconic anhydride, and citraconic anhydride. Especially preferred of these is maleic anhydride.

The amount of these modifiers used for the modification is usually from 1 to 25% by weight, preferably from 3 to 20% by weight, based on the amount of the low-molecular weight polypropylene.

If the number-average molecular weight of the thus-obtained component d1 is lower than the lower limit specified above, heat resistance is poor. If the number-average molecular weight thereof exceeds the upper limit, the compatibilizing effect thereof is insufficient, so that mechanical properties of resin film are poor.

If the acid value of component d1 is lower than the lower limit specified above, the compatibilizing effect thereof is insufficient. If the acid value thereof exceeds the upper limit, the component has an impaired hue, and a resulting resin film is undesirably colored.

Component d2

Component d2 can be obtained by secondarily modifying component d1 with an alkanolamine. Examples of the alkanolamine include monomethanolamine, monoisopropanolamine, diethanolamine, and diisopropanolamine. Especially preferred of these is monomethanolamine.

If the number-average molecular weight of the thus-obtained component d2 is lower than the lower limit specified above, the results are impaired suitability for paper feeding and discharge and impaired heat resistance. If the number-average molecular weight thereof exceeds the upper limit, compatibility among resins is impaired.

If the hydroxyl value of component d2 is lower than the lower limit specified above, compatibility among resins is impaired. If the hydroxyl value thereof exceeds the upper limit, print quality tends to be influenced by humidity.

Component d3

Component d3 can be obtained by partly or wholly esterifying the carboxylic acid or carboxylic anhydride units of component d1 with a polyoxyalkylene compound.

Examples of the polyoxyalkylene compound include glycol having a hydroxyl group at each end, such as polyethylene glycol and polypropylene glycol, and compounds derived from the glycol by replacing the hydroxyl groups with amino or epoxy groups. Examples thereof further include polyoxyalkylene compounds basically having a hydroxyl group at one end and obtained by causing a compound having active hydrogen such as an alcohol (e.g., methanol, ethanol, butanol, octanol, lauryl alcohol, or 2-ethylhexyl alcohol) or a phenol (e.g., phenol, an alkylphenol, naphthol, phenylphenol, or benzylphenol) to add an alkylene oxide.

These polyoxyalkylene compounds (component d3) have a molecular weight of usually from 300 to 5,000. The degree of esterification thereof is preferred that from 10 to 100 mol% of the carboxylic acid or carboxylic anhydride units of component d1 have been esterified.

If the number-average molecular weight of component d3 is lower than the lower limit, heat resistance of resin film is reduced. If the number-average molecular weight thereof exceeds the upper limit, the compatibilizing effect thereof is insufficient.

A combination of two or more of the modified low-molecular weight polypropylenes as components d1 to d3 described above may be used. Also usable is a modified low-molecular weight polypropylene having carboxyl, hydroxyl, and polyoxyalkylene groups in one molecule.

The content of component D in all base material resin components in the present invention is usually from 1 to 20% by weight, preferably from 3 to 15% by weight.

If the content of component D is lower than the lower limit specified above, the compatibilizing effect is lessened and phase separation between resins is apt to occur. If the content thereof exceeds the upper limit, a resulting film has reduced strength.

(e) Fine Inorganic Particles (Component E)

For the purpose of imparting suitability for writing with pencil and opaqueness to a film, fine inorganic particles (component E) having an average particle diameter of from 0.01 to 15 μm, preferably from 0.1 to 5 μm, are incorporated in an amount of from 10 to 250 parts by weight per 100 parts by weight of the resin components.

By incorporating the fine inorganic particles, printability of the film can be improved.

Examples of the fine inorganic particles include extender pigments such as calcium carbonate, calcined clay, silica, diatomaceous earth, talc, titanium oxide, and barium sulfate and printability improvers such as lithium chloride, potassium chloride, magnesium chloride, calcium chloride, sodium bromide, potassium bromide, and magnesium bromide. Preferred of these from the standpoint of the drying of offset inks is calcium carbonate.

A printability improver, such as selected from alkali metal halides and alkaline earth metal halides, is desirably used in combination with an extender pigment in an amount of from 0.01 to 2 parts by weight per 100 parts by weight of the resin components.

(f) Optional Components (Component F)

Incorporation of a nonionic, anionic, cationic, or amphoteric surfactant (component F) into the base material resin components is effective in further improving antistatic properties.

Any desired other known additives for resins may be added to the base material resin components of the synthetic paper of the present invention according to various uses, as long as these optional components do not adversely influence the properties of the resin components. Examples of such additives include dyes, nucleating agents, lubricants, plasticizers, release agents, antioxidants, flame retardants, and ultraviolet absorbers.

(2) Film Molding (Stretched Resin Film)

The stretched resin film is obtained by mixing and kneading resins comprising components A, B, C, and D with fine inorganic particles, melt-extruding the resulting resin composition into a film, and then stretching the extrudate with an ordinary uni- or biaxially stretching machine either uniaxially from 3 to 8 times or biaxially from 10 to 60 times in terms of areal ratio at a temperature lower than the melting point of the polypropylene resin.

Examples of the stretching means include tenters, mandrels, and pressure rolls.

Within the film thus stretched with the stretching machine, the resins are in an oriented state. Since the film contains fine inorganic particles, microvoids are formed inside the film by stretching and the resulting film is opacified. The fine inorganic particles incorporated also cause the film surface to develop microcracks to thereby improve ink adhesion.

The void content of the stretched film may be calculated using the following equation (1):

$$\text{Void content (\%)} = \frac{\rho_o - \rho}{\rho_o} \times 100 \tag{1}$$

$\rho_o$: density of unstretched film
$\rho$: density of stretched film.

Further, the permanent antistatic agent (component B), polyamide resin (component C), modified low-molecular weight polypropylene resin (component D), and other components dispersed in the matrix comprising the polypropylene resin (component A) are elongated by the stretching into long particles (islands) or particles in Rugby ball form. As a result, the distance among the resulting islands of the permanent antistatic agent is reduced, and this results in satisfactory antistatic properties.

Since the distance among islands of the permanent antistatic agent is short, the stretched film comes to have improved offset ink adhesion through a surface treatment.

Further, when the fine inorganic particles are incorporated into the polypropylene resin (component A), because the fine inorganic particles are added in such a manner that part of the polypropylene resin is removed and the fine inorganic particles are therefor replenished, the concentration of the islands of the antistatic agent (component B) in the polypropylene resin (component A) is heightened, whereby the distance among the antistatic agent islands is reduced further. As a result, the effect of occurrence of antistatic properties and ink adhesion are further improved.

Namely, the same level of antistatic properties and the same level of ink adhesion can be obtained using a smaller amount of antistatic and other components which are more expensive than the polypropylene resin. Consequently, the stretched resin film has an advantage of low production cost.

The stretched resin film, when used alone as a synthetic paper, generally has a thickness of from 8 to 300 µm, preferably from 12 to 150 µm. The stretched resin film may be laminated with another resin layer to form a synthetic paper. In this case, the surface layers of the laminate each is constituted of the stretched resin film. The thickness of each stretched resin film according to the present invention in the laminate is preferably at least 5 µm from the standpoint of long-term retention of the antistatic agent.

In the laminate, the thickness of surface layer consisting of the stretched resin film of the present invention is from 5 to 50 µm, preferably from 5 to 30 µm, and the total thickness of the laminate is from 8 to 300 µm, preferably from 12 to 150 µm.

(3) Oxidation Treatment

The surface of the stretched film is oxidized for the purposes of imparting offset printability and screen printability and rapidly imparting antistatic properties.

The oxidation can be accomplished by a general surface treatment. Examples thereof include corona discharge treatment, flame-plasma treatment, flame treatment, glow discharge treatment, and ozone treatment. Especially preferred of these are corona discharge treatment performed in an amount of from 20 to 500 W/min·m$^2$ and flame-plasma treatment performed in an amount of from 10 to 1,000 kcal, because these treatments are more effective in imparting printing ink adhesion and antistatic properties.

The present invention will be explained below in more detail by reference to the Examples.

[I] Evaluation Methods

Synthetic papers comprising stretched films were evaluated by the following methods.

(1) Surface Resistivity

(a) The surface resistivity of a film obtained through molding was measured in a 20°C atmosphere having a relative humidity of 50% without subjecting the film to any treatment with a surface resistivity meter "HIRESTA MODEL HT-250" manufactured by Dia Instrument Co., Ltd.

(b) A film obtained through molding was cleaned with an aqueous solution of a detergent ("Mama-Lemon", manufactured by Lion Corp.), subsequently sufficiently washed with ion-exchanged water, and then dried, following which its surface resistivity was measured under the same conditions as in (a) above.

(2) Offset Printability

A film obtained through molding was cut into 500 sheets (wide 636 mm, length 469 mm). These sheets were subjected to offset printing using an offset press (Dia 1F-2, manufactured by Mitsubishi Heavy Industries, Ltd.) in a 20°C atmosphere having a relative humidity of 50%.

Evaluation of Ink Adhesion

A pressure-sensitive adhesive tape ("Cellophane Tape", trademark manufactured by Nichiban Co., Ltd.) was applied to the ink surface of the sheet which had undergone offset printing. After being sufficiently pressed against the sample, the tape was stripped at a constant speed and angle. How the ink was peeled away was judged based on the following criteria.

◎: The ink remained unpeeled.
○: Ink peeling occurred, but the peeling was too slight to pose a problem in practical use.
△: The ink was peeled almost completely to pose a problem in practical use, although the peeling force required was not so weak.
✕: All the ink was peeled with very weak peeling force and was incapable of practical use.

**EP 0 810 077 B1**

Evaluation of Suitability for Paper Feeding/Discharge

Five hundred sheets of the film were subjected to continuous printing, and the suitability for paper feeding/ discharge was evaluated based on the number of printing stops caused by paper feeding/discharge troubles. The criteria used are as follows.

⊚: No stops.
○: The number of stops was 1.
Δ: The number of stops was 2-5.
×: The number of stops was 6 or larger.

(3) Gloss was measured in accordance with JIS P-8142 (75 degrees).

(4) Opaqueness was measured in accordance with JIS P-8138.

[II] Experiment Examples

[Production of Polyetheresteramides Containing Aromatic Rings (Component B)]

PRODUCTION EXAMPLE 1

Into a stainless-steel autoclave having a capacity of 3 liters were introduced 112 parts by weight of ε-caprolactam, 105 parts by weight of an ethylene oxide adduct of bisphenol A having a number-average molecular weight of 1,000, 15 parts by weight of adipic acid, 0.3 part by weight of "Irganox 1010" (antioxidant manufactured by Ciba-Geigy Ltd., trademark), 0.5 part by weight of zirconyl acetate, and 7 parts by weight of water. After the atmosphere in the autoclave was replaced with nitrogen gas, the autoclave was closed and the contents were stirred at a temperature of 220°C and an elevated pressure for 1.5 hours to obtain a homogeneous solution. Polymerization was then conducted at 245°C and a reduced pressure of 1 mmHg or lower for 3.5 hours to obtain a viscous polymer.
This polymer was taken out of the autoclave, placed in the form of a strand on a belt, and then pelletized to obtain a polyetheresteramide.
The obtained polymer had a reduced viscosity ($\eta_{sp}$/C, m-cresol solvent, 25°C, C=0.5 wt%; the same applies hereinafter) of 1.80. This polyetheresteramide is referred to as [B1].

PRODUCTION EXAMPLE 2

Into a stainless-steel autoclave having a capacity of 3 liters were introduced 110 parts by weight of 12-aminododecanoic acid, 16.3 parts by weight of adipic acid, 0.3 part by weight of "Irganox 1010," and 7 parts by weight of water. After the atmosphere in the autoclave was replaced with nitrogen gas, the autoclave was closed and the contents were stirred at a temperature of 220°C and an elevated pressure for 4 hours. Thus, 117 parts by weight of a polyamide oligomer having a carboxylic group at each end and having an acid value of 107 were obtained.
To the oligomer were added 225 parts by weight of an ethylene oxide adduct of bisphenol A having a number-average molecular weight of 2,000 and 0.5 part by weight of zirconyl acetate. Polymerization was then conducted at 245°C and a reduced pressure of 1 mmHg or lower for 5 hours to obtain a viscous polymer.
This reaction product was treated in the same manner as in Production Example 1 to obtain a polyetheresteramide.
The polymer obtained had a reduced viscosity of 2.10. This polyetheresteramide is referred to as [B2].

[Production of Modified Low-molecular Weight Polyolefins (Component D)]

PRODUCTION EXAMPLE 3

A mixture of 95 parts by weight of a low-molecular weight polypropylene obtained through thermal degradation and having a number-average molecular weight of 12,000 and a density of 0.89 g/cm$^3$ and 5 parts by weight of maleic anhydride was melted at 180°C in a nitrogen stream. To the melt was dropwise added a 50% xylene solution of 1.5 parts by weight of dicumyl peroxide over a period of 15 minutes. The reactants were then reacted for 1 hour. After completion of the reaction, the solvent was distilled off to obtain an acid-modified low-molecular weight polypropylene.
This modified polymer had an acid value of 25.7 and a number-average molecular weight of 15,000. This modification product is referred to as [D1].

PRODUCTION EXAMPLE 4

Into 100 parts by weight of xylene was dissolved 95 parts by weight of the acid-modified low-molecular weight polypropylene obtained in Production Example 3 at 120°C in a nitrogen stream. To the solution was dropwise added 5 parts by weight of monoethanolamine over a period of 15 minutes. The reactants were then reacted for 1 hour. After completion of the reaction, the solvent and the monoethanolamine remaining unreacted were distilled off to obtain a modified low-molecular weight polypropylene having hydroxyl group.

This modified polymer had a hydroxyl value of 25.2 and a number-average molecular weight of 16,000. This modification product is referred to as [D2].

PRODUCTION EXAMPLE 5

A mixture of 95 parts by weight of the acid-modified low-molecular weight polypropylene obtained in Production Example 4 and 50 parts by weight of an adduct of 24 moles of ethylene oxide to lauryl alcohol was melted at 180°C in a nitrogen stream. Esterification reaction was then conducted at a reduced pressure of 10 mmHg or lower for 5 hours to obtain a polyoxyalkylene-modified low-molecular weight polypropylene.

This polyoxyalkylene-modified polymer had a hydroxyl value of 0.5 and a number-average molecular weight of 18,000. Upon NMR spectrometry, the esterification reaction was ascertained to have been carried out quantitatively. This modification product is referred to as [D3].

EXAMPLE 1

(1) Into a mixture of 80 wt% polypropylene having an MFR of 0.8 g/10 min, a melting point of 164°C (DSC peak temperature), and a degree of crystallinity of 67% (manufactured by Mitsubishi Chemical Corp.) and 8 wt% high-density polyethylene (manufactured by Mitsubishi Chemical Corp.) was incorporated 12 wt% calcium carbonate having an average particle diameter of 1.5 μm. The resulting composition (I) was melt-kneaded with an extruder set at 270°C, subsequently extruded into a film, and then cooled with a cooler to obtain an unstretched film. After being heated to 140°C, this film was stretched in the machine direction 5 times.

(2) Using a Henschel mixer, 54 wt% polyetheresteramide [B1] obtained in Production Example 1 was mixed for 3 minutes with 18 wt% polyamide resin (UBE Nylon 1013B manufactured by UBE Industries, Inc.), 18 wt% acid-modified low-molecular weight polypropylene [D1] obtained in Production Example 3, and 10 wt% polypropylene having an MFR of 4 g/10 min (manufactured by Mitsubishi Chemical Corp.). The resulting mixture was kneaded with a vented twin-screw extruder set at 240°C, extruded into strands with a die, and then cut to obtain a master batch [M] in a pellet form.

(3) Polypropylene having an MFR of 4 g/10 min, a melting point of 164°C, and a degree of crystallinity of 64% (manufactured by Mitsubishi Chemical Corp.) was mixed in an amount of 38 wt% with 40 wt% calcium carbonate having an average particle diameter of 1.2 μm, 5 wt% titanium oxide having an average particle diameter of 0.8 μm, and 17 wt% master batch [M], containing a permanent antistatic agent and obtained in (2) above. The resulting composition (III) was melt-kneaded with an extruder and then laminated, using two extruders, to both sides of the stretched film having a stretching ratio of 5 obtained in (1) above.

This three-layer laminate was heated to 155°C, and then stretched in the transverse direction 8 times with a tenter stretching machine to obtain a stretched film. Subsequently, the stretched film was treated with 50 W/m²·min corona discharge using a discharge device manufactured by Kasuga Denki Co., Ltd. to obtain a three-layer stretched film.

The thicknesses of the individual layers ((III)/(I)/(III)) of this three-layer stretched film were 20 μm/60 μm/20 μm.

COMPARATIVE EXAMPLE 1

(1) Into a mixture of 80 wt% polypropylene having an MFR of 0.8 g/10 min and a melting point of 164°C (DSC peak temperature) (manufactured by Mitsubishi Chemical Corp.) and 8 wt% high-density polyethylene (manufactured by Mitsubishi Chemical Corp.) was incorporated 12 wt% calcium carbonate having an average particle diameter of 1.5 μm. The resulting composition (I) was melt-kneaded with an extruder set at 270°C, subsequently extruded into a film, and then cooled with a cooler to obtain an unstretched film. After being heated to 140°C, this film was stretched in the machine direction 5 times.

(2) Polypropylene having an MFR of 4 g/10 min and a melting point of 164°C (DSC peak temperature) (manufactured by Mitsubishi Chemical Corp.) was mixed in an amount of 55 wt% with 40 wt% calcium carbonate having an average particle diameter of 1.2 μm and 5 wt% titanium oxide. The resulting composition (II) was melt-kneaded with an extruder set at 270°C and then laminated, using two extruders, to both sides of the stretched film having a stretching ratio of 5 obtained in (1) above.

This three-layer laminate was heated to 155°C, and then stretched in the transverse direction 8 times with a tenter stretching machine to obtain a three-layer stretched film.

Subsequently, the stretched film was treated with 50 W/m$^2$·min corona discharge using a discharge device manufactured by Kasuga Denki Co., Ltd. Thereafter, water-soluble acrylic resin antistatic agent "Suftomer 3200" (manufactured by Mitsubishi Chemical Corp.) was applied to the treated stretched film in an amount of 0.1 g/m$^2$ (on a solid basis), and then dried.

The thicknesses of the individual layers (antistatic layer/(II)/(I)/(II)) of the film obtained were 0.1 μm/20 μm/ 60 μm/20 μm.

## COMPARATIVE EXAMPLE 2

(1) Into a mixture of 80 wt% polypropylene having an MFR of 0.8 g/10 min and a melting point of 164°C (DSC peak temperature) (manufactured by Mitsubishi Chemical Corp.) and 8 wt% high-density polyethylene (manufactured by Mitsubishi Chemical Corp.) was incorporated 12 wt% calcium carbonate having an average particle diameter of 1.5 μm. The resulting composition (I) was melt-kneaded with an extruder set at 270°C, subsequently extruded into a film, and then cooled with a cooler to obtain an unstretched film. After being heated to 140°C, this film was stretched in the machine direction 5 times.

(2) Polypropylene having an MFR of 4 g/10 min and a melting point of 164°C (DSC peak temperature) (manufactured by Mitsubishi Chemical Corp.) was mixed in an amount of 80 wt% with 20 wt% master batch [M], containing a permanent antistatic agent and obtained in (2) in Example 1. The resulting composition (III) was melt-kneaded with an extruder and then laminated, using two extruders, to both sides of the stretched film having a stretching ratio of 5 obtained in (1) above.

This three-layer laminate was heated to 155°C, and then stretched in the transverse direction 8 times with a tenter stretching machine to obtain a three-layer stretched film.

The thicknesses of the individual layers ((III)/(I)/(III)) of the film obtained were 20 μm/60 μm/20 μm.

## COMPARATIVE EXAMPLE 3

Compositions (I) and (III) used in Comparative Example 2 were laminated within a die in such a manner that composition (I) served as the intermediate layer sandwiched between two layers of composition (III). The laminate thus obtained by coextrusion was cooled with a cooler to obtain an unstretched three-layer film. The surface of this film was treated with 50 W/m$^2$·min corona discharge using a discharge device manufactured by Kasuga Denki Co., Ltd.

The thicknesses of the individual layers ((III)/(I)/(III)) of the film obtained were 20 μm/60 μm/20 μm.

## EXAMPLE 2

A composition (I) obtained by incorporating 12 wt% calcium carbonate having an average particle diameter of 1.5 μm into a mixture of 80 wt% polypropylene having an MFR of 0.8 g/10 min and a melting point of 164°C (DSC peak temperature) (manufactured by Mitsubishi Chemical Corp.) and 8 wt% high-density polyethylene (manufactured by Mitsubishi Chemical Corp.) and a composition (IV) consisting of 38 wt% polypropylene having an MFR of 4 g/10 min and a melting point of 164°C (DSC peak temperature) (manufactured by Mitsubishi Chemical Corp.), 40 wt% calcium carbonate, 5 wt% titanium oxide, and 17 wt% master batch [M], containing a permanent antistatic agent, were coextruded into a film in such a manner that composition (I) served as the intermediate layer sandwiched between two layers of component (IV). The resulting laminate was cooled with a cooler to obtain an unstretched three-layer film.

Subsequently, this film was heated to 130°C and then stretched in the machine direction 5 times to obtain a uniaxially stretched film.

The surface of this stretched film was subjected to flame-plasma treatment (550 kcal) using flame-plasma treating device Type F-3000 (trade name), manufactured by FLYNN Co.

The thicknesses of the individual layers ((IV)/(I)/(IV)) of the film obtained were 15 µm/80 µm/15 µm.

EXAMPLE 3

A uniaxially stretched film was obtained in the same manner as in Example 2.
Subsequently, the uniaxially stretched film was heated to 155°C and then stretched in the transverse direction 8 times using a tenter stretching machine to obtain a three-layer biaxially stretched film.
The surface of this biaxially stretched film was subjected to the same flame-plasma treatment as in Example 2 to obtain a laminated stretched resin film.

EXAMPLES 4 AND 5

Laminated stretched resin films were obtained in the same manner as in Example 2, except that composition (IV) serving as surface layers was replaced with each of the compositions specified in Table 1.

EXAMPLES 6 TO 8

Laminated stretched resin films were obtained in the same manner as in Example 1, except that composition (III) serving as surface layers was replaced with each of the compositions specified in Table 2.
The above examples and comparative examples and associated test data and performance results are summarized in Tables 1 and 2.

Table 1

| | Final Composition of Surface Layer | | | | | | | | | Molding/Stretching/Surface Treatment | | | |
| | Resins (100 parts)* | | | | | | | Fine inorganic particles (E) | | Thickness (μm) | Stretching of surface layer | | |
| | PP | PEEA | | PA | Modified PP | | | | | front/core/back | Uni- or biaxial stretching | Stretching ratio | Surface treatment |
| | | (B1) | (B2) | | (D1) | (D2) | (D3) | CaCO$_3$ | TiO$_2$ | | | | |
| Ex. 1 | 72.3 | 16.7 | – | 5.5 | 5.5 | – | – | 72.7 | 9.1 | 20/60/20 | uniaxial | 8 | corona |
| Ex. 2 | 72.3 | 16.7 | – | 5.5 | 5.5 | – | – | 72.7 | 9.1 | 15/80/15 | uniaxial | 5 | flame-plasma |
| Ex. 3 | 83.2 | 10.2 | – | 3.3 | 3.3 | – | – | 72.7 | 9.1 | 10/80/10 | biaxial | 40 | flame-plasma |
| Ex. 4 | 83.2 | 10.2 | – | 3.3 | 3.3 | – | – | 5.5 | 5.5 | 15/80/15 | uniaxial | 5 | flame-plasma |
| Ex. 5 | 49.3 | 30.7 | – | 10.0 | 10.0 | – | – | 217 | 16.7 | 15/80/15 | uniaxial | 5 | flame-plasma |

\*: The total resin amount in each composition has been converted to 100 parts by weight to show the amount of fine inorganic particles per 100 parts by weight of the resins.

PP: polypropylene, PEEA: polyetheresteramide, PA: polyamide,
Modified PP: modified polypropylene.

## Table 1 (continued)

| | Evaluation | | | | | |
|---|---|---|---|---|---|---|
| | Surface resistivity (Ω) | | Offset printability | | Optical property | |
| | (a) | (b) | Ink adhesion | Suitability for paper feeding/discharge | Gloss (%) | Opaqueness (%) |
| Ex. 1 | $4 \times 10^{11}$ | $3 \times 10^{11}$ | ◎ | ◎ | 22 | 94 |
| Ex. 2 | $8 \times 10^{11}$ | $4 \times 10^{11}$ | ◎ | ◎ | 20 | 93 |
| Ex. 3 | $1 \times 10^{11}$ | $9 \times 10^{10}$ | ◎ | ◎ | 28 | 95 |
| Ex. 4 | $3 \times 10^{12}$ | $9 \times 10^{11}$ | ○ | ○ | 60 | 83 |
| Ex. 5 | $9 \times 10^{10}$ | $7 \times 10^{10}$ | ◎ | ◎ | 15 | 96 |

Table 2

| | Final Composition of Surface Layer | | | | | | | | | Molding/Stretching/Surface Treatment | | | |
| | Resins (100 parts)* | | | | | | | Fine inorganic particles (E) | | Thickness (µm) | Stretching of surface layer | | Surface treatment |
| | PP | PEEA | | PA | Modified PP | | | | | front/core/back | Uni- or biaxial stretching | Stretching ratio | |
| | | (B1) | (B2) | | (D1) | (D2) | (D3) | CaCO$_3$ | TiO$_2$ | | | | |
| Comp. Ex. 1 | 100 | – | – | – | – | – | – | 72.7 | 9.1 | 0.1/20/-60/20 | uniaxial | 8 | corona + AS coating |
| Comp. Ex. 2 | 82.0 | 10.8 | – | 3.6 | 3.6 | – | – | – | – | 20/60/20 | uniaxial | 8 | none |
| Comp. Ex. 3 | 82.0 | 10.8 | – | 3.6 | 3.6 | – | – | – | – | 20/60/20 | no stretching | | corona |
| Ex. 6 | 72.3 | – | 16.7 | 5.5 | – | – | 5.5 | 72.7 | 9.1 | 20/60/20 | uniaxial | 8 | corona |
| Ex. 7 | 75.0 | 10.0 | – | 10.0 | – | 5 | – | 72.7 | 9.1 | 20/60/20 | uniaxial | 8 | corona |
| Ex. 8 | 75.0 | 10.0 | – | 10.0 | 5 | – | – | 72.7 | 9.1 | 20/60/20 | uniaxial | 8 | corona |

*:  The total resin amount in each composition has been converted to 100 parts by weight to show the amount of fine inorganic particles per 100 parts by weight of the resins.

PP: polypropylene,  PEEA: polyetheresteramide,  PA: polyamide,
Modified PP: modified polypropylene.

Table 2 (continued)

| | Evaluation | | | | | |
|---|---|---|---|---|---|---|
| | Surface resistivity ($\Omega$) | | Offset printability | | Optical property | |
| | (a) | (b) | Ink adhesion | Suitability for paper feeding/discharge | Gloss (%) | Opaqueness (%) |
| Comp. Ex. 1 | $1\times10^{10}$ | $1\times10^{16}$ | △ | ◎ | 20 | 93 |
| Comp. Ex. 2 | $8\times10^{11}$ | $7\times10^{11}$ | × | ○ | 90 | 80 |
| Comp. Ex. 3 | $5\times10^{14}$ | $5\times10^{14}$ | △ | × | 98 | 60 |
| Ex. 6 | $9\times10^{10}$ | $7\times10^{10}$ | ◎ | ◎ | 23 | 95 |
| Ex. 7 | $8\times10^{11}$ | $5\times10^{11}$ | ◎ | ◎ | 26 | 95 |
| Ex. 8 | $6\times10^{11}$ | $4\times10^{11}$ | ◎ | ◎ | 25 | 94 |

As described above, the synthetic paper of the present invention has excellent permanent antistatic properties and offset printability, which properties have not been attained with any prior art technique. Therefore, the synthetic paper of the present invention is especially useful in applications where the synthetic paper is offset prior to use, such as, e.g., various wrapping papers, information papers, labels, cards, books, and slip papers.

While the invention has been described in detail and with reference to specific embodiments thereof, it will be apparent to one skilled in the art that various changes and modifications can be made therein without departing from the scope thereof.

**Claims**

1. A synthetic paper which comprises a film obtained by oxidizing the surface of a film obtained by stretching a resin film comprising as the base material a resin composition comprising

    100 parts by weight of resin components comprising

| component A | a polypropylene resin | 55-90 wt% |
|---|---|---|
| component B | a polyetheresteramide containing rings which is derived from | aromatic |
| component b1 | a polyamide having a number-average molecular weight of from 200 to 5,000 and containing a carboxyl group at each end | |
| component b2 | an alkylene oxide adduct of bisphenol having a number-average molecular weight of from 300 to 5,000 5-40 wt% | |
| component C | a polyamide resin | 3-20 wt% |
| and component D | at least one modified low-molecular weight polypropylene selected from the following components d1 to d3 | 1-20 wt% |
| component d1 | an acid modified low-molecular weight polypropylene having a number-average molecular weight of from 800 to 25,000 and an acid value of from 5 to 150, | |
| component d2 | a hydroxy modified low-molecular weight polypropylene having a number-average molecular weight of from 800 to 25,000 and a hydroxyl value of from 5 to 150, | |
| component d3 | an ester modified low-molecular weight polypropylene obtained by partly or wholly esterifying component dl with a polyoxyalkylene compound and having a number-average molecular weight of from 1,000 to 28,000, | |

    the total amount of all resin components being 100 wt%, and
    from 10 to 250 parts by weight of

    component E:     fine inorganic particles,

    said stretching being conducted at a temperature lower than the melting point of the polypropylene resin as component A.

2. The synthetic paper as claimed in claim 1, wherein the stretched resin film is one obtained by compounding a resin composition comprising the polypropylene resin as component A, the polyetheresteramide having aromatic rings as component B, the polyamide resin as component C, and the modified low-molecular weight polypropylene as component D with the fine inorganic particles as component E, melt-extruding the resulting resin composition into a film, and then stretching the extrudate with an ordinary uni- or biaxially stretching machine either uniaxially from 3 to 8 times or biaxially from 10 to 60 times in terms of areal ratio at a temperature lower than the melting point of the polypropylene resin.

3. The synthetic paper as claimed in claim 1, wherein the stretched resin film has a void content as calculated using the following equation (1) of from 10 to 60%

$$\text{Void content (\%)} = \frac{\rho_o - \rho}{\rho_o} \times 100 \qquad (1)$$

$\rho_0$:     density of the unstretched film

$\rho$ :     density of the stretched film.

4.     The synthetic paper as claimed in claim 1, wherein the oxidation of the surface of the stretched resin film is conducted by a treatment selected from corona discharge treatment, flame-plasma treatment, flame treatment, glow discharge treatment, and ozone treatment.

5.     The synthetic paper as claimed in claim 4, wherein the corona discharge treatment is performed in an amount of from 20 to 500 W/min·m$^2$.

6.     The synthetic paper as claimed in claim 1, wherein the polyetheresteramide having aromatic rings as component B has a reduced viscosity (0.5 wt% m-cresol solution, 25°C) of from 0.5 to 4.0.

7.     The synthetic paper as claimed in claim 1, wherein the polyetheresteramide having aromatic rings as component B is a polymer derived from the following components b1 and b2:

    component b1: a polyamide having a number-average molecular weight of from 500 to 3,000 and containing a carboxyl group at each end,
    component b2: an alkylene oxide adduct of bisphenol having a number-average molecular weight of from 1,000 to 3,000.

8.     The synthetic paper as claimed in claim 1, wherein the polyetheresteramide having aromatic rings as component B is a polymer synthesized from ε-caprolactam, an ethylene oxide adduct of bisphenol A, and adipic acid.

9.     The synthetic paper as claimed in claim 1, wherein the polyetheresteramide having aromatic rings as component B is a polymer synthesized from 12-aminododecanoic acid, adipic acid, and an ethylene oxide adduct of bisphenol A.

10.     The synthetic paper as claimed in claim 1, wherein the polyamide resin as component C has a reduced viscosity (97% sulfuric acid, concentration 1 g/100 ml, 30°C) of from 0.8 to 5.

11.     The synthetic paper as claimed in claim 1, wherein the polyamide resin as component C is a polyamide selected from the group consisting of nylon 66, nylon 69, nylon 610, nylon 612, nylon 6, nylon 11, nylon 12, nylon 46, nylon 6/66, nylon 6/10, nylon 6/12, and nylon 6/66/12.

12.     The synthetic paper as claimed in claim 1, wherein the modified low-molecular weight polypropylene as component D is at least one member selected from the following components d1 to d3:

    component d1: a modified low-molecular weight polypropylene having a number-average molecular weight of from 1,000 to 20,000 and an acid value of from 10 to 100,
    component d2: a modified low-molecular weight polypropylene having a number-average molecular weight of from 800 to 25,000 and a hydroxyl value of from 10 to 100,
    component d3: a modified low-molecular weight polypropylene obtained by partly or wholly esterifying component d1 with a polyoxyalkylene compound and having a number-average molecular weight of from 1,200 to 25,000.

13.     The synthetic paper as claimed in claim 1, wherein the modified low-molecular weight polypropylene as component D is a polymer obtained by reacting a low-molecular weight polypropylene having a number-average molecular weight of from 700 to 20,000 with an unsaturated acid selected from acrylic acid, methacrylic acid, maleic acid, maleic anhydride, fumaric acid, itaconic acid, itaconic anhydride, and citraconic anhydride.

14.     The synthetic paper as claimed in claim 1, wherein the modified low-molecular weight polypropylene as component D is a polymer obtained by reacting the modified low-molecular weight polypropylene as claimed in claim 13 with an aliphatic amine selected from monomethanolamine, monoisopropanolamine, diethanolamine, and diisopropanolamine.

15.     The synthetic paper as claimed in claim 1, wherein the modified low-molecular weight polypropylene as component D is a polymer obtained by esterifying part or all of the carboxylic acid moieties of the modified low-molecular weight polypropylene as claimed in claim 13 with a hydroxylated polyoxyalkylene compound.

16. The synthetic paper as claimed in claim 1, wherein the fine inorganic particles as component E are particles of at least one member selected from calcium carbonate, calcined clay, silica, diatomaceous earth, talc, titanium oxide, lithium chloride, potassium chloride, magnesium chloride, calcium chloride, sodium bromide, potassium bromide, and magnesium bromide.

17. The synthetic paper as claimed in claim 1, wherein the resin composition comprises 100 parts by weight of resin components consisting of

| component A | a polypropylene resin | 60-85 wt% |
| component B | the polyetheresteramide having aromatic rings | 5-30 wt% |
| component C | a polyamide resin | 3-15 wt% |
| and component D | the modified low-molecular weight polypropylene | 3-15 wt% |

the total amount of all resin components being 100 wt% and from 10 to 250 parts by weight of

component E:   fine inorganic particles.

18. The synthetic paper as claimed in claim 1, which has a thickness of from 8 to 300 $\mu$m.

19. A synthetic paper which comprises a biaxially stretched thermoplastic resin film base material and, laminated thereto on each side, a surface layer consisting of a uniaxially stretched film of the resin composition as claimed in claim 1.

20. The synthetic paper as claimed in claim 19, wherein surface layer consisting of a stretched film of the resin composition as claimed in claim 1 has a thickness of from 5 to 50 $\mu$m, and the total thickness of all constituent layers is from 8 to 300 $\mu$m.

**Patentansprüche**

1. Synthetisches Papier, das einen Film umfasst, der durch Oxidieren der Oberfläche eines Films erhalten wird, der durch Strecken eines Harzfilms erhalten wird, der als Basismaterial eine Harzzusammensetzung umfasst, welche umfasst:
100 Gew.-Teile Harzkomponenten, umfassend

| Komponente A | ein Polypropylenharz | 55-90 Gew.% |
| Komponente B | ein aromatische Ringe enthaltendes Polyetheresteramid, das abgeleitet ist von | 5 -40 Gew.% |
| Komponente b1 | einem Polyamid, das ein zahlendurchschnittliches Molekulargewicht von 200 bis 5.000 hat und eine Carboxylgruppe an jedem Ende enthält | |
| Komponente b2 | einem Alkylenoxid-Addukt von Bisphenol mit einem zahlendurchschnittlichen Molekulargewicht von 300 bis 5.000 | |
| Komponente C | ein Polyamidharz | 3 - 20 Gew.% |
| und Komponente D | mindestens ein modifiziertes Polypropylen mit niedrigem Molekulargewicht, das ausgewählt ist aus den nachstehenden Komponenten d1 bis d3 | 1 - 20 Gew.% |
| Komponente d1 | einem säuremodifizierten Polypropylen mit niedrigem Molekulargewicht mit einem zahlendurchschnittlichen Molekulargewicht von 800 bis 25.000 und einer Säurezahl von 5 bis 150 | |
| Komponente d2 | einem hydroxymodifizierten Polypropylen mit niedrigem Molekulargewicht mit einem zahlendurchschnittlichen Molekulargewicht von 800 bis 25.000 und einer Hydroxylzahl von 5 bis 150 | |

(fortgesetzt)

| | |
|---|---|
| Komponente d3 | einem estermodifizierten Polypropylen mit niedrigem Molekulargewicht, das durch teilweises oder vollständiges Verestern von Komponente d1 mit einer Polyoxyalkylenverbindung erhalten wird und ein zahlendurchschnittliches Molekulargewicht von 1.000 bis 28.000 besitzt |

wobei die Gesamtmenge aller Harzkomponenten 100 Gew.% ist,
und 10 bis 250 Gew.-Teilen Komponente E: feinen anorganischen Partikeln.
wobei das Strecken bei einer Temperatur unterhalb des Schmelzpunkts des Polypropylenharzes als Komponente A durchgeführt wird.

2. Synthetisches Papier gemäss Anspruch 1, wobei der gestreckte Harzfilm durch Vereinigen einer Harzzusammensetzung, umfassend das Polypropylenharz als Komponente A, das Polyetheresteramid mit aromatischen Ringen als Komponente B, das Polyamidharz als Komponente C und das modifizierte Polypropylen mit niedrigem Molekulargewicht als Komponente D, mit den feinen anorganischen Partikeln als Komponente E, durch Schmelzextrudieren der resultierenden Harzzusammensetzung in einen Film und nachfolgendes Strecken des Extrudats mit einer gewöhnlichen uni- oder biaxialen Streckungsmaschine, entweder 3- bis 8-fach uniaxial oder 10- bis 60-fach biaxial, in bezug auf das Flächenverhältnis bei einer Temperatur unterhalb des Schmelzpunkts des Polypropylenharzes erhalten wird.

3. Synthetisches Papier gemäss Anspruch 1, wobei der gestreckte Harzfilm einen unter Verwendung der nachstehenden Gleichung (1) errechneten Hohlraumanteil von 10 bis 60 % besitzt:

$$\text{Hohlraumanteil (\%)} = \frac{\rho_0 - \rho}{\rho_0} \times 100 \qquad (1)$$

$\rho_0$: Dichte des ungestreckten Films
$\rho$ : Dichte des gestreckten Films.

4. Synthetisches Papier gemäss Anspruch 1, wobei die Oxidation der Oberfläche des gestreckten Harzfilms durchgeführt wird durch eine Behandlung, ausgewählt aus Koronaentladungsbehandlung, Flammenplasmabehandlung, Flammenbehandlung, Glimmentladungsbehandlung und Ozonbehandlung.

5. Synthetisches Papier gemäss Anspruch 4, wobei die Koronaentladungsbehandlung in einer Intensität von 20 bis 500 W/min·m$^2$ durchgeführt wird.

6. Synthetisches Papier gemäss Anspruch 1, wobei das Polyetheresteramid mit aromatischen Ringen als Komponente B eine reduzierte Viskosität (0,5 Gew.% m-Cresollösung, 25°C) von 0,5 bis 4,0 hat.

7. Synthetisches Papier gemäss Anspruch 1, wobei das Polyetheresteramid mit aromatischen Ringen als Komponente B ein Polymer ist, das von den nachstehenden Komponenten b1 und b2 abgeleitet ist:

Komponente b1: einem Polyamid, das ein zahlendurchschnittliches Molekulargewicht von 500 bis 3.000 besitzt und an jedem Ende eine Carboxylgruppe enthält,

Komponente b2: einem Alkylenoxid-Addukt von Bisphenol mit einem zahlendurchschnittlichen Molekulargewicht von 1.000 bis 3.000.

8. Synthetisches Papier gemäss Anspruch 1, wobei das Polyetheresteramid mit aromatischen Ringen als Komponente B ein Polymer ist, das aus ε-Caprolactam, einem Ethylenoxid-Addukt von Bisphenol A und Adipinsäure synthetisiert wird.

9. Synthetisches Papier gemäss Anspruch 1, wobei das Polyetheresteramid mit aromatischen Ringen als Komponente B ein Polymer ist, das aus 12-Aminododecansäure, Adipinsäure und einem Ethylenoxid-Addukt von Bisphenol A synthetisiert wird.

10. Synthetisches Papier gemäss Anspruch 1, wobei das Polyamidharz als Komponente C eine reduzierte Viskosität (97 % Schwefelsäure, Konzentration: 1 g/100 ml, 30°C) von 0,8 bis 5 hat.

11. Synthetisches Papier gemäss Anspruch 1, wobei das Polyamidharz als Komponente C ein Polyamid ist, das ausgewählt ist aus der Gruppe bestehend aus Nylon 66, Nylon 69, Nylon 610, Nylon 612, Nylon 6, Nylon 11, Nylon 12, Nylon 46, Nylon 6/66, Nylon 6/10, Nylon 6/12 und Nylon 6/66/12.

12. Synthetisches Papier gemäss Anspruch 1, wobei das modifizierte Polypropylen mit niedrigem Molekulargewicht als Komponente D wenigstens ein Vertreter ist, der ausgewählt ist aus den nachstehenden Komponenten d1 bis d3:

Komponente d1: einem modifizierten Polypropylen mit niedrigem Molekulargewicht mit einem zahlendurchschnittlichen Molekulargewicht von 1.000 bis 20.000 und einer Säurezahl von 10 bis 100,

Komponente d2: einem modifizierten Polypropylen mit niedrigem Molekulargewicht mit einem zahlendurchschnittlichen Molekulargewicht von 800 bis 25.000 und einer Hydroxylzahl von 10 bis 100,

Komponente d3: einem modifizierten Polypropylen mit niedrigem Molekulargewicht, das durch teilweises oder vollständiges Verestern von Komponente d1 mit einer Polyoxyalkylenverbindung erhalten wird und ein zahlendurchschnittliches Molekulargewicht von 1.200 bis 25.000 besitzt.

13. Synthetisches Papier gemäss Anspruch 1, wobei das modifizierte Polypropylen mit niedrigem Molekulargewicht als Komponente D ein Polymer ist, das erhalten wird durch Umsetzen eines Polypropylens mit niedrigem Molekulargewicht mit einem zahlendurchschnittlichen Molekulargewicht von 700 bis 20.000 mit einer ungesättigten Säure, die ausgewählt ist aus Acrylsäure, Methacrylsäure, Maleinsäure, Maleinsäureanhydrid, Fumarsäure, Itaconsäure, Itaconsäureanhydrid und Citraconsäureanhydrid.

14. Synthetisches Papier gemäss Anspruch 1, wobei das modifizierte Polypropylen mit niedrigem Molekulargewicht als Komponente D ein Polymer ist, das erhalten wird durch Umsetzen des modifizierten Polypropylens mit niedrigem Molekulargewicht gemäss Anspruch 13 mit einem aliphatischen Amin, das ausgewählt ist aus Monomethanolamin, Monoisopropanolamin, Diethanolamin und Diisopropanolamin.

15. Synthetisches Papier gemäss Anspruch 1, wobei das modifizierte Polypropylen mit niedrigem Molekulargewicht als Komponente D ein Polymer ist, das erhalten wird durch Verestern eines Teils oder aller Carbonsäureeinheiten des modifizierten Polypropylens mit niedrigem Molekulargewicht gemäss Anspruch 13 mit einer hydroxylierten Polyoxyalkylenverbindung.

16. Synthetisches Papier gemäss Anspruch 1, wobei die feinen anorganischen Partikel als Komponente E Partikel sind von mindestens einem Vertreter, ausgewählt aus Calciumcarbonat, calciniertem Ton, Siliciumdioxid, Diatomeenerde, Talk, Titanoxid, Lithiumchlorid, Kaliumchlorid, Magnesiumchlorid, Calciumchlorid, Natriumbromid, Kaliumbromid und Magnesiumbromid.

17. Synthetisches Papier gemäss Anspruch 1, wobei die Harzzusammensetzung 100 Gew.-Teile Harzkomponenten umfasst, die bestehen aus:

| Komponente A | einem Polypropylenharz | 60 - 85 Gew.% |
| Komponente B | dem Polyetheresteramid mit aromatischen Ringen | 5 - 30 Gew.% |
| Komponente C | einem Polyamidharz | 3 - 15 Gew.% |
| und Komponente D | dem modifizierten Polypropylen mit niedrigem Molekulargewicht | 3 - 15 Gew.% |

wobei die Gesamtmenge aller Harzkomponenten 100 Gew.% beträgt,
und 10 bis 250 Gew.-Teilen Komponente E: feinen anorganischen Partikeln.

18. Synthetisches Papier gemäss Anspruch 1, das eine Dicke von 8 bis 300 μm besitzt.

19. Synthetisches Papier, das ein biaxial gestrecktes thermoplastisches Harzfilm-Basismaterial umfasst und auf jede Seite davon laminiert eine Oberflächenschicht, bestehend aus einem uniaxial gestreckten Film der Harzzusammensetzung gemäss Anspruch 1.

**20.** Synthetisches Papier gemäss Anspruch 19, wobei die Oberflächenschicht, bestehend aus einem gestreckten Film der Harzzusammensetzung gemäss Anspruch 1, eine Dicke von 5 bis 50 µm besitzt und die Gesamtdicke aller Aufbauschichten 8 bis 300 µm beträgt.

**Revendications**

**1.** Papier synthétique qui comprend un film obtenu par oxydation de la surface d'un film obtenu par étirage d'un film de résine comprenant comme matière de base une composition de résine comprenant

100 parties en poids de composants de résine comprenant :

| composant A | résine de polypropylène : | 55 à 90% en poids |
|---|---|---|
| composant B | polyétheresteramide contenant des cycles aromatiques qui est dérivé du | |
| composant b1 | polyamide ayant une masse moléculaire moyenne en nombre de 200 à 5000 et contenant un groupe carboxyle à chaque extrémité | |
| composant b2 | produit d'addition d'un oxyde d'alkylène et du bisphénol ayant une masse moléculaire moyenne en nombre de 300 à 5000 | 5 à 40% en poids |
| composant C | résine de polyamide | 3 à 20% en poids |
| et composant D | au moins un polypropylène de faible masse moléculaire modifié choisi parmi les composants suivants d1 à d3 | 1 à 20% en poids |
| composant d1 | polypropylène de faible masse moléculaire modifié par un acide ayant une masse moléculaire moyenne en nombre de 800 à 25 000 et un indice d'acide de 5 à 150, | |
| composant d2 | polypropylène de faible masse moléculaire modifié par un hydroxyle ayant une masse moléculaire moyenne en nombre de 800 à 25 000 et un indice d'hydroxyle de 5 à 150, | |
| composant d3 | polypropylène de faible masse moléculaire modifié par un ester obtenu en estérifiant partiellement ou totalement le composant d1 avec un composé polyoxyalkyléné et ayant une masse moléculaire moyenne en nombre de 1000 à 28 000, | |

la quantité totale de tous les composants de résine étant de 100% en poids, et de 10 à 250 parties en poids de

composant E : fines particules minérales,

ledit étirage étant effectué à une température inférieure au point de fusion de la résine de polypropylène comme composant A.

**2.** Papier synthétique tel que revendiqué dans la revendication 1, caractérisé en ce que le film de résine étiré en est un obtenu en mélangeant une composition de résine comprenant la résine de polypropylène comme composant A, le polyétheresteramide ayant des cycles aromatiques comme composant B, la résine de polyamide comme composant C, et le polypropylène de faible masse moléculaire modifié comme composant D avec les fines particules minérales comme composant E, en extrudant à l'état fondu la composition de résine résultante en un film, et ensuite en étirant l'extrudat avec une machine ordinaire d'étirage uniaxial ou biaxial, soit uniaxialement de 3 à 8 fois soit biaxialement de 10 à 60 fois en termes de rapport superficiel, à une température inférieure au point de fusion de la résine de polypropylène.

**3.** Papier synthétique tel que revendiqué dans la revendication 1, caractérisé en ce que le film de résine étiré a une quantité de vides de 10 à 60%, telle que calculée en utilisant l'équation suivante (1) :

$$\text{quantité de vides (\%)} = \frac{\rho_0 - \rho}{\rho_0} \times 100 \qquad (1)$$

$\rho_0$ : densité du film non étiré

$\rho$ : densité du film étiré.

4. Papier synthétique tel que revendiqué dans la revendication 1, caractérisé en ce qu'on effectue l'oxydation de la surface du film de résine étiré par un traitement choisi parmi un traitement par décharge corona, un traitement par flamme-plasma, un traitement par flamme, un traitement par décharge luminescente, et un traitement par l'ozone.

5. Papier synthétique tel que revendiqué dans la revendication 4, caractérisé en ce qu'on effectue le traitement par décharge corona en une quantité de 20 à 500 W/min • m$^2$.

6. Papier synthétique tel que revendiqué dans la revendication 1, caractérisé en ce que le polyétheresteramide ayant des cycles aromatiques comme composant B a une viscosité réduite (solution à 0,5% en poids de m-crésol, 25°C) de 0,5 à 4,0.

7. Papier synthétique tel que revendiqué dans la revendication 1, caractérisé en ce que le polyétheresteramide ayant des cycles aromatiques comme composant B est un polymère dérivé des composants b1 et b2 suivants :

   composant b1 : polyamide ayant une masse moléculaire moyenne en nombre de 500 à 3000 et contenant un groupe carboxyle à chaque extrémité,
   composant b2: produit d'addition d'oxyde d'alkylène et de bisphénol ayant une masse moléculaire moyenne en nombre de 1000 à 3000.

8. Papier synthétique tel que revendiqué dans la revendication 1, caractérisé en ce que le polyétheresteramide ayant des cycles aromatiques comme composant B est un polymère synthétisé à partir du $\varepsilon$-caprolactame, un produit d'addition de l'oxyde d'éthylène et du bisphénol A, et l'acide adipique.

9. Papier synthétique tel que revendiqué dans la revendication 1, caractérisé en ce que le polyétheresteramide ayant des cycles aromatiques comme composant B est un polymère synthétisé à partir de l'acide 12-aminododécanoïque, l'acide adipique, et un produit d'addition de l'oxyde d'éthylène et du bisphénol A.

10. Papier synthétique tel que revendiqué dans la revendication 1, caractérisé en ce que la résine de polyamine comme composant C a une viscosité réduite (acide sulfurique à 97%, concentration 1 g/100 ml, 30°C) de 0,8 à 5.

11. Papier synthétique tel que revendiqué dans la revendication 1, caractérisé en ce que la résine de polyamine comme composant C est un polyamide choisi dans le groupe constitué par le nylon 66, le nylon 69, le nylon 610, le nylon 612, le nylon 6, le nylon 11, le nylon 12, le nylon 46, le nylon 6/66, le nylon 6/10, le nylon 6/12, et le nylon 6/66/12.

12. Papier synthétique tel que revendiqué dans la revendication 1, caractérisé en ce que le polypropylène de faible masse moléculaire modifié comme composant D est au moins un membre choisi parmi les composants d1 à d3 suivants :

   composant d1 : polypropylène de faible masse moléculaire modifié ayant une masse moléculaire moyenne en nombre de 1000 à 20 000 et un indice d'acide de 10 à 100,
   composant d2 : polypropylène de faible masse moléculaire modifié ayant une masse moléculaire moyenne en nombre de 800 à 25 000 et un indice d'hydroxyle de 10 à 100,
   composant d3 : polypropylène de faible masse moléculaire modifié obtenu en estérifiant partiellement ou totalement le composant d1 avec un composé polyoxyalkyléné et ayant une masse moléculaire moyenne en nombre de 1200 à 25 000.

13. Papier synthétique tel que revendiqué dans la revendication 1, caractérisé en ce que le polypropylène de faible masse moléculaire modifié comme composant D est un polymère obtenu en faisant réagir un polypropylène de faible masse moléculaire ayant une masse moléculaire moyenne en nombre de 700 à 20 000 avec un acide insaturé choisi parmi l'acide acrylique, l'acide méthacrylique, l'acide maléique, l'anhydride maléique, l'acide fumarique, l'acide itaconique, l'anhydride itaconique, et l'anhydride citraconique.

14. Papier synthétique tel que revendiqué dans la revendication 1, caractérisé en ce que le polypropylène de faible masse moléculaire modifié comme composant D est un polymère obtenu en faisant réagir le polypropylène de faible masse moléculaire modifié tel que revendiqué dans la revendication 13 avec une amine aliphatique choisie parmi la monométhanolamine, la monoisopropanolamine, la diéthanolamine, et la diisopropanolamine.

15. Papier synthétique tel que revendiqué dans la revendication 1, caractérisé en ce que le polypropylène de faible masse moléculaire modifié comme composant D est un polymère obtenu en estérifiant une partie ou l'ensemble des groupements acides carboxyliques du polypropylène de faible masse moléculaire modifié tel que revendiqué dans la revendication 13 avec un composé polyalkylène hydroxylé.

16. Papier synthétique tel que revendiqué dans la revendication 1, caractérisé en ce que les fines particules minérales comme composant E sont des particules d'au moins un membre choisi parmi le carbonate de calcium, l'argile calcinée, la silice, la terre de diatomée, le talc, l'oxyde de titane, le chlorure de lithium, le chlorure de potassium, le chlorure de magnésium, le chlorure de calcium, le bromure de sodium, le bromure de potassium, et le bromure de magnésium.

17. Papier synthétique tel que revendiqué dans la revendication 1, caractérisé en ce que la composition de résine comprend 100 parties en poids de composants de résine constitués par

| composant A | résine de polypropylène | 60 à 85% en poids |
|---|---|---|
| composant B | polyétheresteramide ayant des cycles aromatiques | 5 à 30% en poids |
| composant C | résine de polyamide | 3 à 15% en poids |
| et composant D | polypropylène de faible masse moléculaire modifié | 3 à 15% en poids |

la quantité totale de tous les composants de résine étant 100% en poids, et de 10 à 250 parties en poids de

composant E :    fines particules organiques.

18. Papier synthétique tel que revendiqué dans la revendication 1, qui a une épaisseur de 8 à 300 μm.

19. Papier synthétique qui comprend comme matière de base un film de résine thermoplastique étiré biaxialement et sur chaque face duquel est stratifiée une couche superficielle constituée d'un film étiré uniaxialement de la composition de résine telle que revendiquée dans la revendication 1.

20. Papier synthétique tel que revendiqué dans la revendication 19, caractérisé en ce que la couche superficielle constituée d'un film étiré de composition de résine telle que revendiquée dans la revendication 1 a une épaisseur de 5 à 50 μm, et que l'épaisseur totale de toutes les couches constitutives est de 8 à 300 μm.